(19) Europäisches Patentamt / European Patent Office / Office européen des brevets

(11) **EP 2 833 534 B1**

(12) # FASCICULE DE BREVET EUROPEEN


(45) Date de publication et mention de la délivrance du brevet: **02.10.2019 Bulletin 2019/40**

(51) Int Cl.: ***H02M 5/458*** *(2006.01)* ***H02M 1/08*** *(2006.01)* ***H02M 1/12*** *(2006.01)* *H02M 1/00* *(2006.01)*

(21) Numéro de dépôt: **14175617.1**

(22) Date de dépôt: **03.07.2014**


(54) **Variateur de vitesse avec redresseur actif et onduleur utilisant des modifications des impulsions pour reduire des perturbations de mode commun**

Antriebssystem mit aktivem Gleichrichter und Wechselrichter mit Pulsmodifikation zur Minimierung von Gleichtaktstörungen

Variable frequency drive system with active rectifier / inverter using pulse modification for minimizing common mode disturbances


(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2013 FR 1357586**

(43) Date de publication de la demande: **04.02.2015 Bulletin 2015/06**



(73) Titulaire: **Schneider Toshiba Inverter Europe SAS**
**27120 Pacy sur Eure (FR)**

(72) Inventeurs:
- **Allaert, Yves-Laurent**
**27200 VERNON (FR)**
- **Messaoudi, Mehdi**
**59000 Lille (FR)**
- **Boulharts, Hocine**
**78510 Triel sur Seine (FR)**

(74) Mandataire: **Dufresne, Thierry et al**
**Schneider Electric Industries SAS**
**Service Propriété Industrielle**
**35 rue Joseph Monier - CS 30323**
**92506 Rueil-Malmaison Cedex (FR)**



(56) Documents cités:
**EP-A2- 1 148 622**
**DE-A1- 10 010 350**
**US-A1- 2006 186 854**
**US-A1- 2007 210 847**
**US-A1- 2012 081 932**

- **HYEOUN-DONG LEE ET AL: "A common-mode voltage reduction in converter-inverter system by shifting active space vector in a sampling period", APPLIED POWER ELECTRONICS CONFERENCE AND EXPOSITION, 1999. APEC '99. F OURTEENTH ANNUAL DALLAS, TX, USA 14-18 MARCH 1999, PISCATAWAY, NJ, USA,IEEE, US, vol. 2, 14 mars 1999 (1999-03-14), pages 1046-1051, XP010323589, ISBN: 978-0-7803-5160-8**



Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



EP 2 833 534 B1

## Description

### Domaine technique de l'invention

La présente invention se rapporte à un procédé de commande mis en oeuvre dans un variateur de vitesse pour réduire la tension et le courant de mode commun et au variateur de vitesse correspondant.

### Etat de la technique

Un variateur de vitesse comporte plusieurs phases d'entrée connectées au réseau, par exemple trois phases d'entrée s'il est connecté sur un réseau triphasé. Connecté à ses phases d'entrée, un variateur de vitesse classique comporte un étage redresseur permettant de transformer la tension alternative fournie par le réseau en une tension continue. Le variateur de vitesse comporte également un bus continu d'alimentation doté d'une première ligne d'alimentation à potentiel positif et d'une seconde ligne d'alimentation à potentiel négatif entre lesquelles est appliquée la tension continue et un condensateur de bus connecté entre la première ligne d'alimentation et la seconde ligne d'alimentation et destiné à maintenir constante la tension continue sur le bus. En aval du condensateur de bus, un convertisseur de puissance de type variateur de vitesse comporte également un étage onduleur doté de plusieurs bras de commutation, en règle générale trois bras de commutation, connectés chacun à une phase de sortie raccordée à une charge électrique. Chaque bras de commutation est connecté entre la première ligne d'alimentation et la seconde ligne d'alimentation du bus et comporte, par exemple dans le cas d'un convertisseur à deux niveaux, deux transistors de puissance commandés pour transformer la tension continue en une tension variable à destination de la charge électrique.

L'étage redresseur placé en entrée du convertisseur peut être de type actif en comportant également plusieurs bras de commutation dotés chacun par exemple d'au moins deux transistors de puissance. Ces transistors sont chacun commandés par un dispositif de commande de grille afin de pouvoir transformer la tension alternative du réseau en une tension continue appliquée sur le bus d'alimentation. En anglais, ce type de convertisseur avec un étage redresseur actif en entrée est communément appelé "Active front end".

De manière classique, les commandes des transistors de puissance de l'étage redresseur et de l'étage onduleur sont réalisées par modulation de largeur d'impulsion (ci-après MLI). Une MLI de type intersective consiste à comparer une porteuse triangulaire symétrique ou asymétrique avec une ou plusieurs modulantes. Pour un transistor de puissance de l'étage onduleur ou de l'étage redresseur, les intersections entre une porteuse et une ou plusieurs modulantes définissent les instants de commutation à la fermeture et à l'ouverture du transistor.

Il est connu que l'augmentation de la fréquence de découpage appliquée à un étage onduleur entraîne une hausse du courant de mode commun. Le courant de mode commun généré peut emprunter différents chemins entre un variateur de vitesse et une charge électrique. Ces chemins sont créés par des couplages capacitifs générés entre les conducteurs du câble reliant le variateur à la charge électrique, entre les enroulements du moteur et le stator ou entre les semi-conducteurs de puissance et le dissipateur relié à la terre... Lorsque le variateur de vitesse comporte un étage onduleur et un étage redresseur actif, la tension de mode commun totale du variateur de vitesse est la somme des perturbations fournies par l'étage redresseur et par l'étage onduleur.

Différentes solutions ont été développées pour réduire le courant de mode commun. Ces solutions peuvent consister en l'ajout d'un filtre passif et/ou en une action sur les commandes de l'étage redresseur et de l'étage onduleur.

Le document JP2003018853 propose par exemple une méthode pour réduire le courant de mode commun dans un variateur de vitesse en synchronisant la commutation à la fermeture (ou à l'ouverture) de trois transistors de puissance (hauts ou bas) de l'étage redresseur avec la commutation à la fermeture (ou à l'ouverture) des trois transistors correspondants (respectivement hauts ou bas) de l'étage onduleur. Cette solution permet de réduire la dimension du filtre employé pour filtrer le courant de mode commun et donc de diminuer les coûts du convertisseur. Cependant, elle ne permet pas de réduire suffisamment le courant de mode commun.

Le brevet US6,185,115 décrit également une méthode permettant de synchroniser les commutations de l'étage redresseur avec les commutations de l'étage onduleur de manière à réduire la tension de mode commun. De même que pour le document cité précédemment, cette méthode n'est pas satisfaisante car elle ne permet pas de réduire suffisamment la tension de mode commun dans le variateur de vitesse. En effet, la méthode proposée consiste à synchroniser la commutation d'un seul bras de commutation de l'étage onduleur, en front montant et descendant, avec la commutation d'un seul bras de commutation de l'étage redresseur ce qui permet, pour une période de découpage, de passer seulement de douze fronts de tension à huit fronts de tension sur tous les bras de commutation.

La demande de brevet EP2442436A2 décrit également une méthode de synchronisation des commutations entre l'étage redresseur et l'étage onduleur. La méthode permet de synchroniser chaque commutation d'un transistor de l'étage redresseur avec une commutation de l'étage onduleur, permettant ainsi de réduire la tension de mode commun totale générée. Les documents US2006/0186854 et US2012/0081932 illustrent également l'état de la technique de cette demande.

Cependant, les solutions décrites dans ces brevets antérieurs ne sont pas suffisantes. La tension de mode commun générée côté redresseur et la tension de mode commun générée côté onduleur ne s'élimine pas par la seule synchronisation des commutations.

Le but de l'invention est de proposer un variateur de vitesse à redresseur actif doté d'une solution pour réduire de manière plus prononcée la tension de mode commun générée au niveau de l'étage redresseur et au niveau de l'étage onduleur.

**Exposé de l'invention**

Ce but est atteint par un procédé de commande mis en oeuvre dans un variateur de vitesse qui comporte :

- un étage redresseur connecté à plusieurs phases d'entrée recevant un courant d'entrée et un étage onduleur connecté à plusieurs phases de sortie sur lesquelles circule un courant de sortie à destination d'une charge électrique,
- un bus continu d'alimentation reliant l'étage redresseur à l'étage onduleur et comportant une première ligne d'alimentation et une deuxième ligne d'alimentation,
- l'étage redresseur et l'étage onduleur comportant chacun au moins deux bras de commutation connectés à la première ligne d'alimentation et à la deuxième ligne d'alimentation, chaque bras de commutation comprenant au moins deux transistors,

le procédé de commande comportant les étapes suivantes de :

- pour une commutation d'un transistor de l'étage redresseur, détermination d'un premier signal de commande correspondant à un premier courant de grille à appliquer à la grille du transistor à commuter de manière à agir sur la vitesse de la variation d'une première tension générée par la commutation,
- pour une commutation d'un transistor de l'étage onduleur, détermination d'un deuxième signal de commande correspondant à un deuxième courant de grille à appliquer à la grille du transistor à commuter de manière à agir sur la vitesse de la variation d'une deuxième tension générée par la commutation,
- détermination d'un premier instant de commutation du transistor de l'étage redresseur et d'un deuxième instant de commutation du transistor de l'étage onduleur,
- le premier signal de commande, le deuxième signal de commande, le premier instant de commutation et le deuxième instant de commutation étant déterminés de manière minimiser la différence entre la première tension et la deuxième tension.

Selon une particularité, la détermination du premier signal de commande est réalisée en tenant compte du courant d'entrée.

Selon une autre particularité, la détermination du deuxième signal de commande est réalisée en tenant compte du courant de sortie.

L'invention concerne également un variateur de vitesse comportant :

- un étage redresseur connecté à plusieurs phases d'entrée recevant un courant d'entrée et un étage onduleur connecté à plusieurs phases de sortie sur lesquelles circule un courant de sortie à destination d'une charge électrique,
- un bus continu d'alimentation reliant l'étage redresseur à l'étage onduleur et comportant une première ligne d'alimentation et une deuxième ligne d'alimentation,
- l'étage redresseur et l'étage onduleur comportant chacun au moins deux bras de commutation connectés à la première ligne d'alimentation et à la deuxième ligne d'alimentation, chaque bras de commutation comprenant au moins deux transistors,

le variateur de vitesse comportant :

- pour une commutation d'un transistor de l'étage redresseur, un premier module de détermination d'un premier signal de commande correspondant à un courant de grille à appliquer à la grille du transistor à commuter de manière à agir sur la vitesse de la variation d'une première tension générée par la commutation,
- pour une commutation d'un transistor de l'étage onduleur, un deuxième module détermination d'un deuxième signal de commande correspondant à un deuxième courant de grille à appliquer à la grille du transistor à commuter de manière à agir sur la vitesse de la variation d'une deuxième tension générée par la commutation,
- un troisième module de détermination d'un premier instant de commutation du transistor de l'étage redresseur et d'un deuxième instant de commutation du transistor de l'étage onduleur,
- le premier signal de commande, le deuxième signal de commande, le premier instant de commutation et le deuxième instant de commutation étant déterminés de manière minimiser la différence entre la première tension et la deuxième tension.

Selon une particularité, le premier module de détermination est agencé pour tenir compte du courant d'entrée.

Selon une autre particularité, le deuxième module de détermination est agencé pour tenir compte du courant de sortie.

Selon une autre particularité, le variateur de vitesse comporte un ensemble de résistances connecté à la grille de chaque transistor de manière à pouvoir faire varier son courant de grille.

Selon une autre particularité, le premier module de détermination est agencé pour tenir compte des pertes par commutation générées dans les transistors à commuter de l'étage redresseur.

Selon une autre particularité, le deuxième module de détermination est agencé pour tenir compte des pertes par commutation générées dans les transistors à commuter de l'étage onduleur.

## Brève description des figures

D'autres caractéristiques et avantages vont apparaître dans la description détaillée qui suit faite en regard des dessins annexés dans lesquels :

- la figure 1 représente, de manière schématique, un variateur de vitesse conforme à l'invention,
- la figure 2 illustre le procédé de commande de l'invention mis en oeuvre dans le variateur de vitesse de l'invention,
- les figures 3A et 3B représentent deux variantes possibles à mettre en oeuvre dans le variateur de vitesse de l'invention pour faire varier le courant de grille d'un transistor à commander,
- les figures 4A et 4B représentent deux courbes permettant d'illustrer l'intérêt de la solution de l'invention,
- les figures 5A et 5B représentent deux courbes illustrant le principe de fonctionnement d'une variante de réalisation de l'invention.

## Description détaillée d'au moins un mode de réalisation

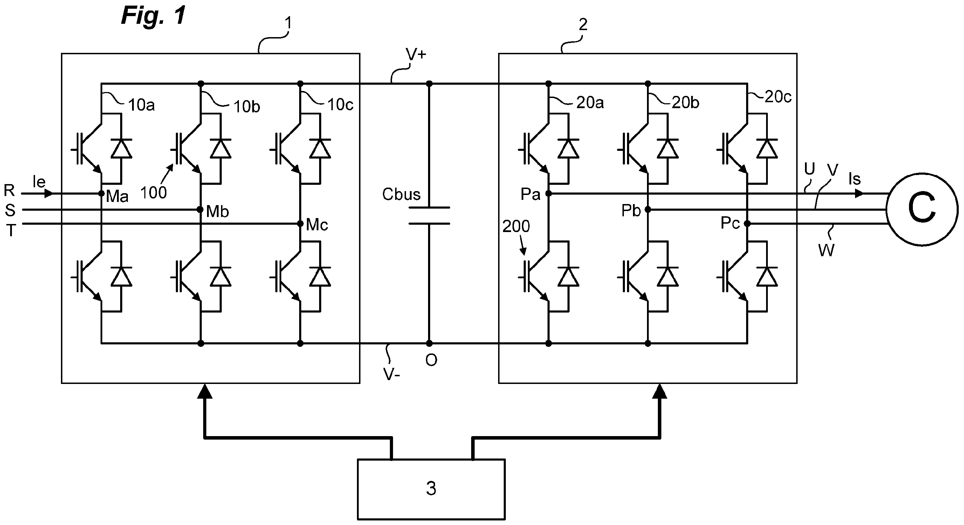

En référence à la figure 1, de manière connue, un variateur de vitesse comporte un étage redresseur 1, un bus continu d'alimentation et un étage onduleur 2. Différentes configurations de variateur de vitesse sont possibles. La présente invention s'applique tout particulièrement aux variateurs de vitesse comportant un étage redresseur actif.

La figure 1 représente par exemple un variateur de vitesse à deux niveaux doté d'un étage redresseur 1 actif.

En référence à la figure 1, l'étage redresseur 1 est connecté au réseau via des inductances AC (non représentées), par exemple sur trois phases d'entrée R, S, T pour un étage redresseur 1 triphasé. Habituellement, dans un variateur de vitesse, l'étage redresseur est composé d'un pont de diodes. Cependant, l'étage redresseur 1 peut aussi être de type actif en comportant un ou plusieurs bras de commutation 10a, 10b, 10c commandés identiques. L'étage redresseur 1 est ainsi commandé pour contrôler le courant prélevé sur le réseau et pour transformer la tension alternative fournie par le réseau en une tension continue appliquée sur le bus continu d'alimentation. Sur un réseau triphasé, l'étage redresseur 1 comporte trois bras de commutation 10a, 10b, 10c connectés chacun à l'une des trois phases d'entrée R, S, T du réseau triphasé à travers les inductances AC. Dans une configuration classique, chaque bras de commutation comporte par exemple deux transistors de puissance 100, par exemple de type IGBT ou JFET et un point milieu de connexion Ma, Mb, Mc situé entre les deux transistors et connecté à une phase d'entrée R, S, T. Le bus continu d'alimentation de puissance relie l'étage redresseur 1 à l'étage onduleur 2. Il comporte une ligne d'alimentation à potentiel positif V+ et une ligne d'alimentation à potentiel négatif V-. Au moins un condensateur de bus Cbus est connecté à chacune des deux lignes d'alimentation du bus et permet de maintenir la tension du bus à une valeur constante.

Sur la figure 1, l'étage onduleur 2 est connecté au bus continu d'alimentation, en aval du condensateur de bus Cbus. Il comporte plusieurs bras de commutation 20a, 20b, 20c identiques connectés chacun à une phase de sortie U, V, W reliée à la charge électrique C. Pour une charge électrique C fonctionnant en triphasé, l'étage onduleur 2 comporte ainsi trois bras de commutation 20a, 20b, 20c. Dans un étage onduleur 2 de configuration classique (figure 1), chaque bras de commutation 20a, 20b, 20c comporte deux transistors de puissance 200 et un point milieu de connexion Pa, Pb, Pc situé entre les deux transistors et connecté à la charge électrique.

Le variateur comporte également une unité de commande 3 permettant de commander la commutation de chacun des bras de commutation de l'étage redresseur 1 et la commutation de chacun des bras de commutation de l'étage onduleur 2. Pour chaque commutation d'un transistor de puissance d'un bras de commutation, l'unité de commande 3 utilise une commande par Modulation de Largeur d'impulsion (MLI ou PWM en anglais) permettant de définir les instants de commutation de chaque transistor de l'étage redresseur 1 et de l'étage onduleur 2. La commande par MLI classique est de type intersective et consiste à comparer une porteuse triangulaire symétrique ou asymétrique avec une ou plusieurs modulantes. Les intersections entre la porteuse et la ou les modulantes définissent les instants de commutation à la fermeture et à l'ouverture du transistor de puissance.

Le procédé de commande de l'invention s'applique à un variateur de vitesse qui comporte un même nombre de bras de commutation, par exemple trois bras de commutation, sur l'étage redresseur 1 et l'étage onduleur 2, chaque bras comportant au moins deux transistors de puissance. Préférentiellement, le nombre de niveaux de l'étage redresseur 1 est identique au nombre de niveaux de l'étage onduleur 2. Sur la figure 1, l'étage redresseur 1 à deux niveaux est ainsi associé avec un étage onduleur 2 classique à deux niveaux.

L'invention vise à réduire de manière conséquente le courant de mode commun dans un variateur de vitesse qui comporte un étage redresseur 1 actif et un étage onduleur 2.

Cette structure de variateur de vitesse présente en effet deux sources de tension de mode commun liées à la présence de commutations sur l'étage onduleur 2 et sur l'étage redresseur 1. En commutant, l'étage onduleur 2 génère une tension de mode commun dénommée Vmcinv et l'étage redresseur 1 génère une tension de mode commun Vmcrec définies par les relations suivantes :

$$\mathrm{Vmcinv} = \frac{V_{U0} + V_{V0} + V_{W0}}{3}$$

$$\mathrm{Vmcrec} = \frac{V_{R0} + V_{S0} + V_{T0}}{3}$$

Dans lesquelles :

- $V_{U0}$, $V_{V0}$, $V_{W0}$ correspondent aux tensions simples sur les phases de sortie U, V, W de l'étage onduleur, référencées au point bas (O) du bus continu d'alimentation,
- $V_{R0}$, $V_{S0}$, $V_{T0}$ correspondent aux tensions simples de chaque bras de l'étage redresseur, référencées au point bas (O) du bus continu d'alimentation.

La tension de mode commun totale du variateur de vitesse est égale à la somme des perturbations fournies par l'étage redresseur 1 et par l'étage onduleur 2. Comme les tensions de mode commun générées par l'étage redresseur 1 et par l'étage onduleur 2 sont de signes opposés, on obtient la relation suivante exprimant la tension de mode commun totale générée sur le variateur de vitesse :

$$\mathrm{Vmc} = \frac{V_{U0} + V_{V0} + V_{W0}}{3} - \frac{V_{R0} + V_{S0} + V_{T0}}{3}$$

En considérant que l'étage redresseur 1 et l'étage onduleur 2 commutent à la même fréquence de découpage, un variateur de vitesse à redresseur actif génère donc deux fois plus de variations de la tension de mode commun qu'un variateur classique.

Il est connu de la demande de brevet EP2442436A2 une méthode de synchronisation des commutations entre l'étage redresseur et l'étage onduleur permettant de compenser la tension de mode commun générée par l'étage onduleur 2 par la tension de mode commun générée par l'étage redresseur 1, ou inversement. D'autres méthodes moins efficaces ont également été décrites dans des documents antérieurs.

Le procédé de commande décrit dans la demande de brevet EP2442436A2 consiste à commander l'étage onduleur 2 et l'étage redresseur 1 de manière synchronisée (en temps) de telle sorte qu'une variation de potentiel (=front montant ou front descendant) appliquée sur une phase d'entrée R, S, T corresponde toujours à une variation de potentiel (=front montant ou front descendant) de même signe appliquée sur une phase de sortie U, V, W.

Préférentiellement, le principe de l'invention décrit dans la présente demande vient se superposer à une méthode antérieure de synchronisation des commutations telle que celle décrite dans la demande EP2442436A2.

Le procédé de commande de l'invention vise en plus à tenir compte des variations de tension (dv/dt) générées par chaque commutation des transistors de l'étage onduleur 2 et des transistors de l'étage redresseur 1. Le but du procédé de l'invention est d'atténuer, même de supprimer, la tension de mode commun en synchronisant les variations de tension générées par les deux commutations sur l'étage redresseur 1 et sur l'étage onduleur 2.

Dans la suite de la description, nous considérerons la commutation d'un transistor 100 de l'étage redresseur 1 et la commutation correspondante d'un transistor 200 de l'étage onduleur 2. De manière connue, la commutation d'un transistor est réalisée en appliquant sur sa grille un courant de grille constant.

La synchronisation des variations de tension générées par chacune des deux commutations consiste à obtenir, pour les deux variations de tension, une même vitesse de variation ou, autrement dit une même pente si l'on considère les deux courbes de variation de la tension générée par chacune des deux commutations.

Pour faire varier cette pente, l'invention consiste à agir sur le courant de grille Ige appliqué sur le transistor 100 de l'étage redresseur et sur le courant de grille Igs appliqué sur le transistor 200 de l'étage onduleur.

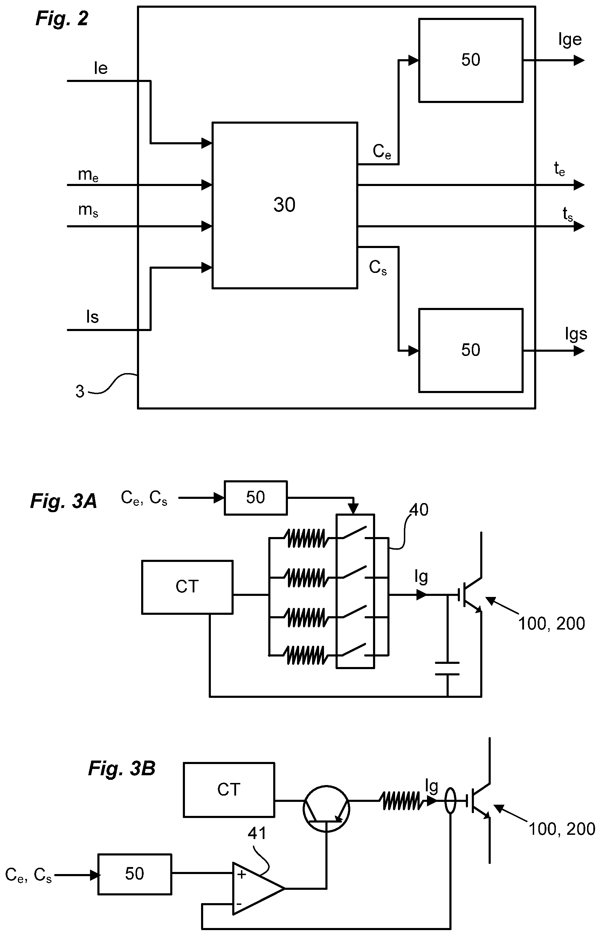

Différentes solutions permettent de faire varier le courant de grille. Des exemples de réalisation sont représentés sur les figures 3A et 3B. Sur la figure 3A, un ensemble de résistances 40 commandées est placé en sortie du dispositif de commande du transistor commandé et connectés à la grille du transistor 100, 200 commandé. Les résistances sont connectées en parallèle mais il serait également possible de les positionner en série. Une autre solution représentée sur la figure 3B consiste par exemple à employer une source de courant contrôlée par un circuit analogique 41.

Selon l'invention telle que représentée sur la figure 2, l'unité de commande 3 reçoit en entrée le courant d'entrée Ie présent sur les phases d'entrée R, S, T, le courant de sortie Is présent sur les phases de sortie U, V, W, la modulante $m_e$ de la commande en MLI de l'étage redresseur 1 et la modulante $m_s$ de la commande MLI de l'étage onduleur 2. A partir de ces données, le procédé de l'invention consiste donc à mettre en oeuvre dans un module de calcul 30 de l'unité de commande 3, ledit module de calcul 30 comprenant :

- un premier module de détermination d'un premier signal de commande $C_e$ correspondant à un premier courant de grille Ige à appliquer sur la grille du transistor de l'étage redresseur 1,

- un deuxième module de détermination d'un deuxième signal de commande $C_s$ correspondant à un deuxième courant de grille Igs à appliquer sur la grille du transistor de l'étage onduleur 2, et
- un troisième module de détermination d'un premier instant de commutation $t_e$ du transistor de l'étage redresseur 1 et d'un deuxième instant de commutation $t_s$ du transistor de l'étage onduleur 2.

Pour déterminer les deux signaux de commande représentatifs des courants de grille à appliquer aux transistors, les modules de détermination tiennent compte du courant d'entrée ou du courant de sortie venant charger la capacité de la grille du transistor. L'évolution du chargement en courant de cette capacité de grille étant connue, il est possible de connaître la pente de la variation de la tension et donc d'ajuster la valeur du courant de grille à appliquer au transistor commandé.

Le premier signal de commande $C_e$ et le deuxième signal de commande $C_s$ sont envoyés chacun à un dispositif de commande 50 permettant de faire varier le courant de grille Ige, Igs à destination du transistor à commander, ledit courant de grille étant normalement généré par un dispositif de commande CT de grille ("gate driver") classique. Préférentiellement, les deux dispositifs de commande 50 font partie de l'unité de commande 3.

Le premier signal de commande $C_e$, le deuxième signal de commande $C_s$, le premier instant de commutation $t_e$ et le deuxième instant de commutation $t_s$ sont déterminés par l'unité de commande 3 de manière à minimiser la différence entre la tension Vrec générée par la commutation du transistor de l'étage redresseur 1 et la tension Vinv générée par la commutation du transistor de l'étage onduleur 2.

Préférentiellement, comme décrit dans les brevets antérieurs, le premier instant de commutation $t_e$ et le deuxième instant de commutation $t_s$ sont identiques de manière à synchroniser les commutations et donc à minimiser la tension de mode commun générée.

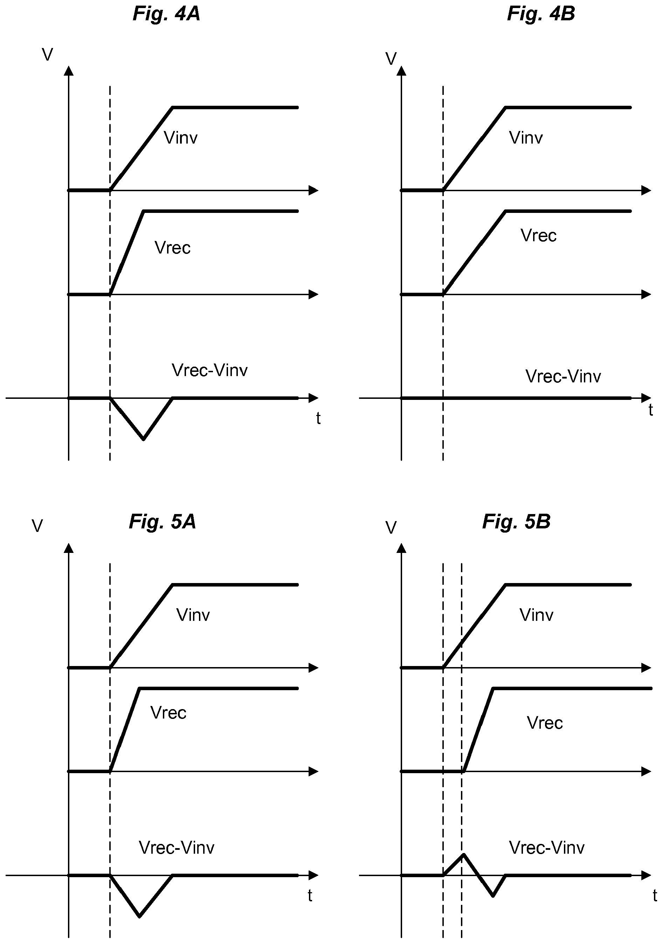

En plus de la synchronisation des commutations, le premier signal de commande $C_e$ et le deuxième signal de commande $C_s$ permettent d'agir sur les vitesses de variation des tensions générées lors des commutations. Préférentiellement, les deux signaux de commande sont déterminés de manière à ce que les deux vitesses soient égales. Sur la figure 4A, les instants de commutation $t_e$, $t_s$ sont synchronisés mais aucune action sur les vitesses de variation des tensions n'est entreprise. On peut voir que la différence entre la tension Vrec générée côté redresseur et la tension Vinv générée côté onduleur n'est pas nulle, entraînant ainsi une tension de mode commun. Sur la figure 4B, les instants de commutation $t_e$, $t_s$ sont synchronisés, ainsi que les pentes des variations de tension. De cette manière la différence de tension est nulle, générant ainsi aucune tension de mode commun.

Selon l'invention, le premier module de détermination et le deuxième module de détermination peuvent être agencés pour tenir compte des pertes par commutation générées dans le transistor commandé. En effet, si les pertes sont amenées à être trop importantes, le courant de grille Ige, Igs générée pour la commande de chaque transistor est ajusté pour tenir compte des pertes par effet joule occasionnés. Par ailleurs, dans cette situation, le premier instant de commutation et le deuxième instant de commutation sont désynchronisés de manière à réduire l'amplitude générée par la différence entre les deux tensions générés par les commutations. Le principe est illustré par les figures 5A et 5B. Sur la figure 5A, les deux signaux de commande ont été générés pour tenir compte des pertes occasionnés, entraînant des tensions ayant des vitesses de variation distinctes. Les deux instants de commutation $t_e$, $t_s$ étant synchronisés, on peut voir que la différence entre la tension Vrev côté redresseur et la tension Vinv côté onduleur est importante. Pour minimiser l'amplitude de la différence de tension, les deux instants de commutation $t_e$, $t_s$ sont désynchronisés comme représenté sur la figure 5B.

**Revendications**

1. Procédé de commande mis en oeuvre dans un variateur de vitesse qui comporte :

   - un étage redresseur (1) connecté à plusieurs phases d'entrée (R, S, T) recevant un courant d'entrée (Ie) et un étage onduleur (2) connecté à plusieurs phases de sortie (U, V, W) sur lesquelles circule un courant de sortie (Is) à destination d'une charge électrique (C),
   - un bus continu d'alimentation reliant l'étage redresseur (1) à l'étage onduleur (2) et comportant une première ligne d'alimentation (V+) et une deuxième ligne d'alimentation (V-),
   - l'étage redresseur (1) et l'étage onduleur (2) comportant chacun au moins deux bras de commutation (10a, 10b, 10c, 20a, 20b, 20c) connectés à la première ligne d'alimentation et à la deuxième ligne d'alimentation, chaque bras de commutation comprenant au moins deux transistors,

   **caractérisé en ce que** le procédé de commande comporte les étapes suivantes de :

   - pour une commutation d'un transistor (100) de l'étage redresseur (1), détermination, en tenant compte du courant d'entrée (Ie), d'un premier signal de commande (Ce) correspondant à un premier courant de grille (Ige) à appliquer à la grille du transistor à commuter de manière à agir sur la vitesse de la variation d'une première tension (Vrec) générée par la commutation,
- pour une commutation d'un transistor (200) de l'étage onduleur (2), détermination, en tenant compte du courant de sortie (Is), d'un deuxième signal de commande (Cs) correspondant à un deuxième courant de grille à appliquer à la grille du transistor à commuter de manière à agir sur la vitesse de la variation d'une deuxième tension (Vinv) générée par la commutation,
- détermination d'un premier instant de commutation (te) du transistor de l'étage redresseur et d'un deuxième instant de commutation (ts) du transistor de l'étage onduleur (2),
- le premier signal de commande (Ce), le deuxième signal de commande (Cs), le premier instant de commutation et le deuxième instant de commutation étant déterminés de manière minimiser la différence entre la première tension (Vrec) et la deuxième tension (Vinv).

**2.** Variateur de vitesse comportant :

- un étage redresseur (1) connecté à plusieurs phases d'entrée (R, S, T) recevant un courant d'entrée et un étage onduleur (2) connecté à plusieurs phases de sortie (U, V, W) sur lesquelles circule un courant de sortie à destination d'une charge électrique,
- un bus continu d'alimentation reliant l'étage redresseur (1) à l'étage onduleur (2) et comportant une première ligne d'alimentation (V+) et une deuxième ligne d'alimentation (V-),
- l'étage redresseur (1) et l'étage onduleur (2) comportant chacun au moins deux bras de commutation (10a, 10b, 10c, 20a, 20b, 20c) connectés à la première ligne d'alimentation et à la deuxième ligne d'alimentation, chaque bras de commutation comprenant au moins deux transistors,

**caractérisé en ce que** le variateur de vitesse comporte :

- pour une commutation d'un transistor (100) de l'étage redresseur, un premier module de détermination, en tenant compte du courant d'entrée, d'un premier signal de commande (Ce) correspondant à un courant de grille (Ige) à appliquer à la grille du transistor à commuter de manière à agir sur la vitesse de la variation d'une première tension générée par la commutation,
- pour une commutation d'un transistor (200) de l'étage onduleur, un deuxième module détermination, en tenant compte du courant de sortie, d'un deuxième signal de commande (Cs) correspondant à un deuxième courant de grille (Igs) à appliquer à la grille du transistor à commuter de manière à agir sur la vitesse de la variation d'une deuxième tension générée par la commutation,
- un troisième module de détermination d'un premier instant de commutation (te) du transistor de l'étage redresseur (1) et d'un deuxième instant de commutation (ts) du transistor de l'étage onduleur,
- le premier signal de commande, le deuxième signal de commande, le premier instant de commutation et le deuxième instant de commutation étant déterminés de manière minimiser la différence entre la première tension et la deuxième tension.

**3.** Variateur selon la revendication 2, **caractérisé en ce que** le variateur de vitesse comporte un ensemble de résistances (40) connecté à la grille de chaque transistor de manière à pouvoir faire varier son courant de grille (Ige, Igs).

**4.** Variateur selon la revendication 2, **caractérisé en ce que** le premier module de détermination est agencé pour tenir compte des pertes par commutation générées dans les transistors à commuter de l'étage redresseur.

**5.** Variateur selon la revendication 2, **caractérisé en ce que** le deuxième module de détermination est agencé pour tenir compte des pertes par commutation générées dans les transistors à commuter de l'étage onduleur.

## Patentansprüche

**1.** Steuerverfahren, das in einem Antriebssystem umgesetzt wird, das Folgendes umfasst:

- eine Gleichrichterstufe (1), die an mehrere Eingangsphasen (R, S, T) angeschlossen ist, die einen Eingangsstrom (Ie) empfangen, und eine Wechselrichterstufe (2), die an mehrere Ausgangsphasen (U, V, W) angeschlossen ist, auf welchen ein Ausgangsstrom (Is) zu einer elektrischen Last (C) zirkuliert,
- einen kontinuierlichen Versorgungsbus, der die Gleichrichterstufe (1) mit der Wechselrichterstufe (2) verbindet und eine erste Versorgungsleitung (V+) und eine zweite Versorgungsleitung (V-) umfasst,
- wobei die Gleichrichterstufe (1) und die Wechselrichterstufe (2) jeweils mindestens zwei Umschaltzweige (10a, 10b, 10c, 20a, 20b, 20c) umfassen, die mit der ersten Versorgungsleitung und mit der zweiten Versorgungsleitung verbunden sind, wobei jeder Umschaltzweig mindestens zwei Transistoren umfasst,

**dadurch gekennzeichnet, dass** das Steuerverfahren die folgenden Schritte umfasst:

- für eine Umschaltung eines Transistors (100) der Gleichrichterstufe (1), Bestimmen unter Berücksichtigung des Eingangsstroms (Ie) eines ersten Steuersignals (Ce), das einem ersten Gitterstrom (Ige) entspricht, der an das Gitter des Transistors, der umzuschalten ist, derart anzulegen ist, dass auf die Geschwindigkeit der Variation einer ersten Spannung (Vrec), die von der Umschaltung erzeugt wird, eingewirkt wird,
- für eine Umschaltung eines Transistors (200) der Wechselrichterstufe (2), Bestimmen unter Berücksichtigung des Ausgangsstroms (Is) eines zweiten Steuersignals (Cs), das einem zweiten Gitterstrom entspricht, der an das Gitter des Transistors, der umzuschalten ist, derart angelegt wird, dass auf die Geschwindigkeit der Variation einer zweiten Spannung (Vinv), die von der Umschaltung erzeugt wird, eingewirkt wird,
- Bestimmen eines ersten Umschaltaugenblicks (te) des Transistors der Gleichrichterstufe und eines zweiten Umschaltaugenblicks (ts) des Transistors der Wechselrichterstufe (2),
- wobei das erste Steuersignal (Ce), das zweite Steuersignal (Cs), der erste Umschaltaugenblick und der zweite Umschaltaugenblick derart bestimmt werden, dass der Unterschied zwischen der ersten Spannung (Vrec) und der zweiten Spannung (Vinv) minimiert wird.

2. Antriebssystem, das Folgendes umfasst:

- eine Gleichrichterstufe (1), die an mehrere Eingangsphasen (R, S, T) angeschlossen ist, die einen Eingangsstrom empfangen, und eine Wechselrichterstufe (2), die an mehrere Ausgangsphasen (U, V, W) angeschlossen ist, auf welchen ein Ausgangsstrom zu einer elektrischen Last zirkuliert,
- einen kontinuierlichen Versorgungsbus, der die Gleichrichterstufe (1) mit der Wechselrichterstufe (2) verbindet und eine erste Versorgungsleitung (V+) und eine zweite Versorgungsleitung (V-) umfasst,
- wobei die Gleichrichterstufe (1) und die Wechselrichterstufe (2) jeweils mindestens zwei Umschaltzweige (10a, 10b, 10c, 20a, 20b, 20c) umfassen, die mit der ersten Versorgungsleitung und mit der zweiten Versorgungsleitung verbunden sind, wobei jeder Umschaltzweig mindestens zwei Transistoren umfasst,

**dadurch gekennzeichnet, dass** der Antriebssystem Folgendes umfasst:

- für eine Umschaltung eines Transistors (100) der Gleichrichterstufe, ein Modul zum Bestimmen unter Berücksichtigung des Eingangsstroms eines ersten Steuersignals (Ce), das einem Gitterstrom (Ige) entspricht, der an das Gitter des Transistors, der umzuschalten ist, derart angelegt wird, dass auf die Geschwindigkeit der Variation einer ersten Spannung, die von der Umschaltung erzeugt wird, eingewirkt wird,
- für eine Umschaltung eines Transistors (200) der Wechselrichterstufe ein zweites Modul zum Bestimmen unter Berücksichtigung des Ausgangsstroms eines zweiten Steuersignals (Cs), das einem zweiten Gitterstrom (Igs) entspricht, der an das Gitter des Transistors, der umzuschalten ist, derart angelegt wird, dass auf die Geschwindigkeit der Variation einer zweiten Spannung eingewirkt wird, die von der Umschaltung erzeugt wird,
- ein drittes Modul zum Bestimmen eines ersten Umschaltaugenblicks (te) des Transistors der Gleichrichterstufe (1) und eines zweiten Umschaltaugenblicks (ts) des Transistors der Wechselrichterstufe,
- wobei das erste Steuersignal, das zweite Steuersignal, der erste Umschaltaugenblick und der zweite Umschaltaugenblick derart bestimmt werden, dass der Unterschied zwischen der ersten Spannung und der zweiten Spannung minimiert wird.

3. Antriebssystem nach Anspruch 2, **dadurch gekennzeichnet, dass** das Antriebssystem eine Einheit von Widerständen (40) umfasst, die an das Gitter jedes Transistors derart angeschlossen ist, dass sein Gitterstrom (Ige, Igs) variiert werden kann.

4. Antriebssystem nach Anspruch 2, **dadurch gekennzeichnet, dass** das erste Bestimmungsmodul eingerichtet ist, um die Verluste durch Umschaltung, die in den Transistoren, die umzuschalten sind, der Gleichrichterstufe erzeugt werden, zu berücksichtigen.

5. Antriebssystem nach Anspruch 2, **dadurch gekennzeichnet, dass** das zweite Bestimmungsmodul eingerichtet ist, um die Verluste durch Umschaltung, die in den Transistoren, die umzuschalten sind, der Wechselrichterstufe erzeugt werden, zu berücksichtigen.

## Claims

1. Method of control implemented in a variable speed drive which comprises:

- a rectifier stage (1) connected to several input phases (R, S, T) receiving an input current (Ie) and an inverter stage (2) connected to several output phases (U, V, W) on which there flows an output current (Is) destined for an electrical load (C),
- a DC power supply bus linking the rectifier stage (1) to the inverter stage (2) and comprising a first power supply line (V+) and a second power supply line (V-),
- the rectifier stage (1) and the inverter stage (2) each comprising at least two switching arms (10a, 10b, 10c, 20a, 20b, 20c) connected to the first power supply line and to the second power supply line, each switching arm comprising at least two transistors,

**characterized in that** the method of control comprises the following steps of:

- for a switching of a transistor (100) of the rectifier stage (1), determination, while taking account of the input current (Ie), of a first control signal (Ce) corresponding to a first gate current (Ige) to be applied to the gate of the transistor to be switched so as to act on the rate of the variation of a first voltage (Vrec) generated by the switching,
- for a switching of a transistor (200) of the inverter stage (2), determination, while taking account of the output current (Is), of a second control signal (Cs) corresponding to a second gate current to be applied to the gate of the transistor to be switched so as to act on the rate of the variation of a second voltage (Vinv) generated by the switching,
- determination of a first instant of switching (te) of the transistor of the rectifier stage and of a second instant of switching (ts) of the transistor of the inverter stage (2),
- the first control signal (Ce), the second control signal (Cs), the first instant of switching and the second instant of switching being determined so as to minimize the difference between the first voltage (Vrec) and the second voltage (Vinv).

2. Variable speed drive comprising:

- a rectifier stage (1) connected to several input phases (R, S, T) receiving an input current and an inverter stage (2) connected to several output phases (U, V, W) on which there flows an output current destined for an electrical load,
- a DC power supply bus linking the rectifier stage (1) to the inverter stage (2) and comprising a first power supply line (V+) and a second power supply line (V-),
- the rectifier stage (1) and the inverter stage (2) each comprising at least two switching arms (10a, 10b, 10c, 20a, 20b, 20c) connected to the first power supply line and to the second power supply line, each switching arm comprising at least two transistors,

**characterized in that** the variable speed drive comprises:

- for a switching of a transistor (100) of the rectifier stage, a first module for determining, taking account of the input current, a first control signal (Ce) corresponding to a gate current (Ige) to be applied to the gate of the transistor to be switched so as to act on the rate of the variation of a first voltage generated by the switching,
- for a switching of a transistor (200) of the inverter stage, a second module for determining, taking account of the output current, a second control signal (Cs) corresponding to a second gate current (Igs) to be applied to the gate of the transistor to be switched so as to act on the rate of the variation of a second voltage generated by the switching,
- a third module for determining a first instant of switching (te) of the transistor of the rectifier stage (1) and of a second instant of switching (ts) of the transistor of the inverter stage,
- the first control signal, the second control signal, the first instant of switching and the second instant of switching being determined so as to minimize the difference between the first voltage and the second voltage.

3. Variable drive according to Claim 2, **characterized in that** the variable speed drive comprises a set of resistors (40) connected to the gate of each transistor so as to be able to vary its gate current (Ige, Igs).

4. Variable drive according to Claim 2, **characterized in that** the first determining module is designed to take account of the switching losses generated in the transistors to be switched of the rectifier stage.

5. Variable drive according to Claim 2, **characterized in that** the second determining module is designed to take account of the switching losses generated in the transistors to be switched of the inverter stage.

C
Is
U
V
W
2
20a
20b
20c
Pa
Pb
Pc
200
V+
Cbus
O
V-
3
1
10a
10b
10c
Ma
Mb
Mc
100
Ie
R
S
T

*Fig. 1*

Fig. 2
Ie
me
ms
Is
30
Ce
Cs
te
ts
50
50
Ige
Igs
3

Fig. 3A
Ce, Cs
50
40
CT
Ig
100, 200
Fig. 3B
CT
Ig
100, 200
41
Ce, Cs
50
+
-

Fig. 4A
V
Vinv
Vrec
Vrec-Vinv
t
Fig. 4B
V
Vinv
Vrec
Vrec-Vinv
t
Fig. 5A
V
Vinv
Vrec
Vrec-Vinv
t
Fig. 5B
V
Vinv
Vrec
Vrec-Vinv
t

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- JP 2003018853 B
- US 6185115 A
- EP 2442436 A2
- US 20060186854 A
- US 20120081932 A